# EUROPEAN PATENT APPLICATION

(11) **EP 4 654 051 A1**
(43) Date of publication of application: **26.11.2025**
(21) Application number: 25177088.9
(22) Date of filing: 16.05.2025
(51) Int. Cl.: G06F 21/16, G06F 21/64, H04L 9/00, H04L 51/23, H04L 9/40, H04L 9/32

(54) **METHOD FOR CERTIFYING A DIGITAL CONTENT**

(30) Priority: 20.05.2024 IT 202400011368
(71) Applicant: Truescreen S.r.l., 40121 Bologna (IT)
(72) Inventor: TRAVASONI, Giuseppe, 40068 SAN LAZZARO DI SAVENA (BOLOGNA) (IT); UGOLINI, Fabio, 48022 LUGO (RAVENNA) (IT)
(74) Representative: Milli, Simone

(57) **Abstract**

Described is method for certifying a digital content, implemented using at least one processor (3) comprising the following steps:
- setting up a predetermined certification e-mail address (11);
- acquiring an e-mail, containing the digital content, received at said predetermined certification e-mail address (11);
- generating, by cryptographic methods, unique certification information (HASH1, HASH2), on the basis of said e-mail, and associating said unique certification information (HASH1, HASH2) with said e-mail.

## Description

This invention relates to a method for certifying, for example in terms of time, a digital, that is to say informatic, content.

In many sectors, such as, for example, the legal, banking, health and insurance sectors, it is often necessary to verify the authenticity, origin and integrity of digital documents received.

The traditional methods of checking digital documents, based on digital signatures or a cryptographic hash function, have some limitations and drawbacks.

Firstly, they require the availability of a public key or hash code to compare the document received with the original one.

Secondly, they may not provide protection against unintentional or fraudulent changes to the document during transmission or storage.

Thirdly, they do not allow the history and chain of custody of the document to be traced, that is to say, who generated, sent, received or modified it.

The aim of this invention is to provide a method for certifying digital documents which overcomes the limits of traditional methods and which is able to guarantee in a simple and fast manner the authenticity, origin and integrity of the digital documents received from different sources.

The advantages and features of the apparatus and method for grouping together articles according to the invention are more apparent in the detailed description below of a non-limiting example embodiment, with reference to the accompanying drawings, in which:
- Figure 1 is a schematic view of a first embodiment of the system according to this invention;
- Figure 2 is a schematic view of a second embodiment of the system according to the invention.

The invention relates to method for certifying a digital content, implemented using at least one processor 3 comprising the following steps:
- A) setting up a predetermined certification e-mail address I1;
- B) acquisition of an e-mail, containing the digital content, received at said predetermined certification e-mail address I1;
- C) generating, by cryptographic methods, unique certification information (HASH1, HASH2), on the basis of said e-mail, and associating said unique certification information (HASH1, HASH2) with said e-mail.

The expression "certifying a digital content" is used to mean a method, of a technical type, which allows guarantees to be given regarding the actual digital content of the e-mail message (for example, but without limiting the scope of the invention, for probative purposes).

This method is, preferably, actuated by one or more processors 3.

It should be noted in this regard that step A may comprise setting up an e-mail address, the server of which is defined, for example, by a first computer (not illustrated in the accompanying drawings).

With regard to steps B and C, on the other hand, they may involve a different computer from the first, that is to say, a second computer.

In essence, the steps of the method do not necessarily have to be performed on the same computer, that is to say, processor.

It should be noted that the unique certification information HASH1, HASH2 may be a HASH, generated by a cryptographic algorithm, or alternatively a digital signature or a timestamp.

It should also be noted that, according to an aspect, the unique certification information HASH1, HASH2 is generated by an algorithm of the SHA type, that is to say, Secure Hash Algorithms.

In essence, advantageously, the proposed method makes it possible to certify not only the content of an e-mail, including also the attachments as described in more detail below, but also to give a certain date to it.

This method may find advantageous use in the legal acquisition processes, or in any case where it may be necessary to certify the computer content of an e-mail, including all addresses included in the e-mail itself ("*from", "to", "cc", "bcc").*

According to another sa[ect, the step of generating, by means of cryptographic methods, unique information HASH1 starting from said e-mail, comprises a step of generating the unique information HASH1 starting from the e-mail message constituting said e-mail.

Preferably, the e-mail message conforms to the Internet Message format from RFC822 to RFC6854 (and any subsequent updates).

In essence, the e-mail is acquired and saved, and the method then comprises generating the unique information HASH1 starting from this extension.

In essence, the e-mail message is used to generate said unique information HASH1.

According to an aspect, the step of generating, by means of cryptographic methods, unique information HASH1, HASH2 starting from said e-mail, comprises a step of extracting files attached to said e-mail and generating said unique information HASH2 relative to one or more of the files attached to said e-mail.

According to another aspect, the method comprises a step of extracting, from said e-mail, at least one of the following significant fields:
- the sender;
- the recipient;
- the date of dispatch;
- the date of receipt;
- the object;
- the content of the message of said e-mail, preferably text and/or HTML and/or multimedia;
- information relating to the attachments to said e-mail;
- one or more security parameters relative to the authentication protocols, preferably (but without limiting the scope of the invention) DKIM, SPS, DMARC.

According to yet another aspect, the method comprises a step of generating a report, said report comprising at least one of the above-mentioned significant fields (preferably all).

It should be noted that, according to another aspect, said report also comprises the unique information HASH1, HASH2 generated, by cryptographic methods, starting from said e-mail.

According to an aspect, said report is defined by a file according to one of the following extensions: JSON, PDF, xml, xls, xlsx, doc, docx, txt, csv, eml, odt, ods, zip, rar, htm, html, rtf.

In essence, according to an aspect, the method comprises a step of generating a first report structured like a JSON file and a second report structured like a pdf. file.

According to another aspect, the method comprises a step of generating, by cryptographic methods, a unique code HASH3 identifying said report.

It should be noted that said unique code HASH3 is generated by, for example, a Secure Hash Algorithm (preferably SHA256).

According to yet another aspect, the method comprises a step of generating a first file according to one of the following extensions: XML, PDF, xls, xlsx, doc, docx, txt, csv, eml, odt, ods, zip, rar, htm, html, rtf.

According to yet another aspect, the first file contains at least one of the following items of information:
- the unique certification information HASH1, HASH2 of said e-mail;
- the unique identification code HASH3, HASH4 of said report.

It should be noted that, according to yet another aspect, the first file contains at least one of the following items of information:
- the unique certification information HASH1, HASH2 of said e-mail;
- a first unique identification code (HASH3) of said report in a first format selected from among one of the following formats: JSON, PDF, xml, xls, xlsx, doc, docx, txt, csv, eml, odt, ods, zip, rar, htm, html, rtf;
- a second unique identification code (HASH4) of said report in a second format selected from among one of the following formats: JSON, PDF, xml, xls, xlsx, doc, docx, txt, csv, eml, odt, ods, zip, rar, htm, html, rtf, the second format being different from the first format.

Preferably, but not necessarily, the first format is Json and the second format is a pdf.

According to yet another aspect, the method comprises a step of generating, by cryptographic methods, a unique code HASH4 of said first file.

According to yet another aspect, the method comprises a step of applying a timestamp to said first file.

According to another aspect, the method comprises a step of applying a digital signature to said first file.

According to a different embodiment, said report is certified using CadES or Pades methods.

According to yet another embodiment, the method comprises a step of digitally signing a message constituting said e-mail, preferably using CadES format, to define said unique certification information HASH1, HASH2.

The advantage of the above-mentioned method is described below, with specific reference to a case of use.

A user who needs to certify a digital content, or the content of an e-mail, may prepare a normal e-mail (using the desired e-mail program, as well as a desired electronic device, both mobile and of the PC type, or, more generally, an electronic device of any type).

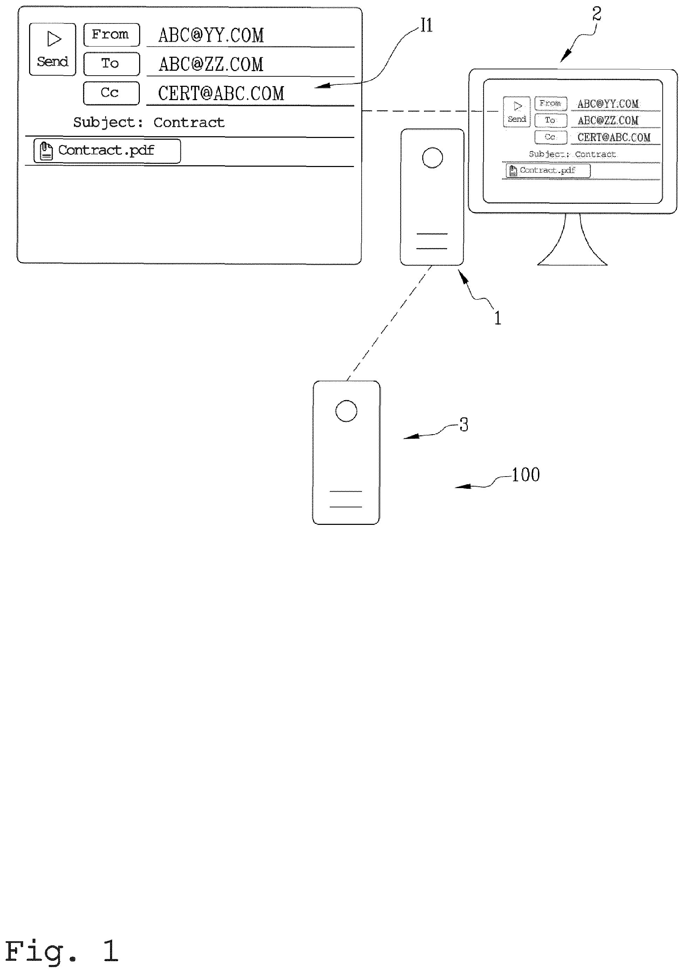

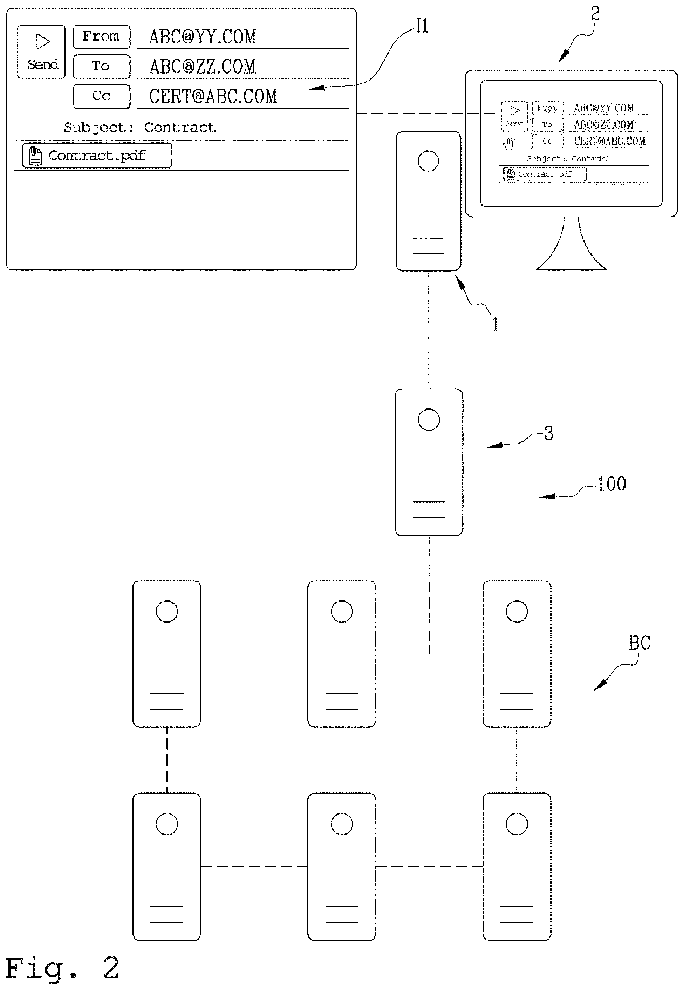

Figures 1 and 2 illustrate the preparation of an e-mail using a PC 1.

The prepared email is shown on the display 2 of the PC 1.

The e-mail contains, in particular, an attached agreement (contract.pdf).

In the case in question, the has user entered a c.c. copy of the e-mail address I1 set up for certification, that is to say "cert@abc.com".

It should be noted that the setting up of the e-mail address I1 is performed, preferably, by means of a suitable user interface (which allows access to a web space).

The method comprises a step of saving said prepared e-mail address I1. After the e-mail has been sent to the recipient (ABC@zz.com), the server 3 acquires the e-mail over the Internet (according to known protocols, POP3, IMAP, etc.).

In effect, periodically, the server 3 can interrogate the mail server, to extract the contents of the new incoming e-mails.

At this point, a unique certification information (HASH1, HASH2) is advantageously generated by cryptographic methods, on the basis of the contents of said email.

In this way, both the e-mail and the attached content, as well as the recipient(s) and the sender, are certified, being able to guarantee over time the existence (and the transmission between the sender and the recipient) of the contents of the e-mail and the relative attachments.

It should be noted, therefore, that the method comprises a step of inserting, in the e-mail, the predetermined certified e-mail address I1 amongst the recipients, or in a carbon copy or in a blind carbon copy.

According to another aspect, the method comprises a step of generating a certification packet, containing at least said unique certification information HASH1, HASH2.

According to yet another aspect, the certification package comprises one or more of the following files:
- a file corresponding to the e-mail message;
- a first file;
- a report (preferably according to one of the following extensions: JSON, PDF, xml, xls, xlsx, doc, docx, txt, csv, eml, odt, ods, zip, rar, htm, html, rtf);
- at least one file attached to the e-mail.

According to yet another aspect, the method comprises a step of transmitting the certification packet to a remote portal, for relative storage.

It should be noted that, according to another aspect, the method comprises a step of authentication, using a user interface, for accessing a reserved area of the remote portal, said reserved area comprising the forensic certification packet.

According to yet another aspect, the method may comprise a step of sending at least the unique certification information (HASH1, HASH2), obtained on the basis of said e-mail, to a blockchain BC as illustrated in Figure 2.

In this way, the blockchain BC would guarantee time certification.

According to an aspect, said report is certified using the blockchain BC. According to this aspect, the report or its unique identification value (for example, a hash) is transmitted (and stored) in the blockchain BC.

The invention relates to a computer system 100 configured for actuating the method according to the accompanying claims.

The computer system 100 comprises at least one processor 3, configured for actuating the method according to the appended claims.

## Claims

1. A method for certifying a digital content, implemented using at least one processor (3) comprising the following steps:
- setting up a predetermined certification e-mail address (11);
- acquiring an e-mail, containing the digital content, received at said predetermined certification e-mail address (11);
- generating, by cryptographic methods, unique certification information (HASH1, HASH2), on the basis of said e-mail, and associating said unique certification information (HASH1, HASH2) with said e-mail, wherein the method also comprises:
- a step of extracting, from said e-mail, at least one of the following significant fields:
- the sender;
- the recipient;
- the date of dispatch;
- the date of receipt;
- the object;
- the content of the message of said e-mail, preferably text or HTML;
- one or more security parameters relative to the authentication protocols, preferably DKIM, SPS, DMARC;
- a step of generating a report,
said report comprising at least one of the above-mentioned significant fields and also the unique information (HASH1, HASH2) generated, using cryptographic methods, starting from said email.

2. The method according to the preceding claim, wherein the step of generating, by means of cryptographic methods, unique information (HASH1) starting from said e-mail comprises a step of generating the unique information (HASH1) starting from the e-mail message constituting said e-mail.

3. The method according to any one of the preceding claims, wherein the step of generating, by means of cryptographic methods, unique information (HASH1, HASH2) starting from said e-mail comprises a step of extracting files attached to said e-mail and generating said unique information (HASH2) relative to one or more of the files attached to said e-mail.

4. The method according to any one of the preceding claims, wherein said report is structured as a file according to one of the following extensions: JSON, PDF, xml, xls, xlsx, doc, docx, txt, csv, eml, odt, ods, zip, rar, htm, html, rtf.

5. The method according to any one of the preceding claims, comprising a step of generating, by means of cryptographic methods, a unique identification code (HASH3) of said report.

6. The method according to any one of the preceding claims, comprising a step of generating a first file according to one of the following extensions: XML, PDF, xls, xlsx, doc, docx, txt, csv, eml, odt, ods, zip, rar, htm, html, rtf.

7. The method according to claims 5 and 6, wherein the first file contains at least one of the following items of information:
- the unique certification information (HASH1, HASH2) of said e-mail;
- the unique identification code (HASH3, HASH4) of said report.

8. The method according to claim 4 or 5, wherein the first file contains at least one of the following items of information:
- the unique certification information (HASH1, HASH2) of said e-mail;
- a first unique identification code (HASH3) of said report in JSON format;
- a second unique identification code (HASH4) of said report in pdf format.

9. The method according to any one of claims 5 to 8, comprising a step of generating, by means of cryptographic methods, a unique code (HASH4) of said first file.

10. The method according to any one of the preceding claims and claim 6 or 9, comprising a step of applying a timestamp on said first file.

11. The method according to any one of the preceding claims and claim 6 or 9, comprising a step of applying a digital signature on said first file.

12. The method according to any one of the preceding claims, wherein said report is certified using CadES or Pades formats.

13. The method according to any one of claims 1 to 11, wherein said report is certified using a blockchain (BC).

14. The method according to any one of the preceding claims, comprising a step of digitally signing an e-mail message constituting said e-mail, preferably using CadES format, to define said unique certification information (HASH1, HASH2).

15. The method according to ny one of the preceding claims, comprising the following steps:
- inserting, in the e-mail, the predetermined certification e-mail address (11) between the recipients, or in a carbon copy or in a blind carbon copy.

16. The method according to any one of the preceding claims, comprising a step of generating a certification packet, containing at least said unique certification information (HASH1, HASH2).

17. The method according to any one of the preceding claims, wherein the certification packet comprises one or more of the following files:
- a file corresponding to the e-mail message;
- a first file according to one of the following extensions: XML, PDF, xls, xlsx, doc, docx, txt, csv, eml, odt, ods, zip, rar, htm, html, rtf;
- a report according to one of the following extensions: JSON, PDF, xml, xls, xlsx, doc, docx, txt, csv, eml, odt, ods, zip, rar, htm, html, rtf.;
- at least one file attached to the e-mail.

18. A computer system (100) comprising at least one processor (3) configured for actuating the steps of the method according to the preceding claims.
